# EUROPEAN PATENT SPECIFICATION

(11) **EP 0 836 684 B1**
(45) Date of publication and mention of the grant of the patent: **09.10.2002**
(21) Application number: 97915638.7
(22) Date of filing: 01.04.1997
(51) Int. Cl.: F16D 25/08

(54) **HYDRAULIC ACTUATORS**
HYDRAULISCHE BETÄTIGUNGSVORRICHTUNG
VERINS HYDRAULIQUES

(30) Priority: 02.04.1996 GB 9606971
(43) Date of publication of application: 22.04.1998
(73) Proprietor: AUTOMOTIVE PRODUCTS FRANCE S.A., 95520 Herblay-Cergy-Pontoise (FR)
(72) Inventor: COME, Olivier, F-45310 Bricy (FR)
(74) Representative: Morrall, Roger
(86) International application number: IB9700417
(87) International publication number: WO97037148

(56) References cited:
- DE-A- 3 148 183
- DE-A- 19 523 011
- FR-E- 81 764
- GB-A- 2 259 346
- PATENT ABSTRACTS OF JAPAN vol. 95, no. 10, 30 November 1995 & JP 07 167161 A (DAIKIN), 4 July 1995,

## Description

This invention relates to hydraulic actuators and in particular, though not exclusively, to actuators in the form of hydraulic slave cylinders for operation by a master cylinder associated with a clutch operating pedal to operate an associated vehicle clutch.

Such actuators have traditionally had sufficient stroke to accommodate the release travel, the wear travel and the installation tolerances of the associated clutch assembly.

DE 3148183A shows such an actuator in which a housing includes an annular bore within which an annular piston is slideable to define a working chamber, the piston being displaceable from a closed end of the bore towards an open end of the bore on pressurisation of the working chamber via a chamber inlet. A radially outer wall of the bore is defined by a sleeve which is sealingly fixed to the housing and an axially extending passage is provided radially outboard of the sleeve along which fluid can flow towards the closed end of the working chamber from the chamber inlet.

There is an increasing requirement to make such actuators more compact and to provide flexibility as to the position of the inlet connection on the actuator.

It is an object of the present invention to provide an improved actuator suitable for operating a clutch which meets the above requirements.

Thus according to the present invention there is provided An hydraulic actuator comprising a housing including an annular bore within which an annular piston is slideable to define a working chamber, the piston being displaceable from a closed end of the bore towards an open end of the bore on pressurisation of the working chamber via an external hydraulic connection, a radially outer wall of the bore being defined by a sleeve which is sealingly fixed to the housing and an axially extending passage being provided radially outboard of the sleeve along which fluid can flow towards the closed end of the working chamber from the external connection, the actuator being characterised in that the housing is a plastics material including an outer cylindrical wall and an integral inner cylindrical wall which together with the sleeve defines the annular bore, the outer cylindrical wall having a connection zone of substantially uniform radial thickness which extends from a location adjacent the sealing of the sleeve to the housing to a location adjacent the closed end of the bore and in that the external hydraulic connection is also of plastics material and of radially outward projecting tubular form and can be integrally moulded with or secured to the outer cylindrical wall at any point along the connection zone thereby ensuring communication with the axial passage and hence the working chamber.

The above connection enables the external hydraulic connection to be positioned at a location anywhere along the axial length of the exterior surface of the actuator housing with the passage extending axially between this external connection and the working chamber inlet between the sleeve and surrounding housing.

In a preferred construction the sleeve and surrounding housing are both made from plastics material. In such a construction the sleeve may be ultrasonically welded to the housing to avoid the necessity for any separate hydraulic sealing between the sleeve and housing.

In alternative arrangements the sleeve may be metallic and mechanically secured to the housing by, for example, forming one end of the sleeve over a flange on the housing. The passage means may be formed by stepping the internal diameter of the housing and/or the external diameter of the sleeve.

Alternatively one or more axially extending grooves could be provided in the internal diameter of the housing and/or the external diameter of the sleeve.

The end of the sleeve at which the passage means enter the working chamber is preferably provided with one or more circumferentially spaced notches through which hydraulic fluid enters or leaves the working chamber.

A hydraulic actuator in accordance with the present invention will not be described, by way of example only, with reference to the accompanying drawings in which;
Figure 1 is a longitudinal section through a clutch operating slave cylinder in accordance with the present invention showing the fully extended condition of the actuator, and
Figure 2 is a longitudinal section through the actuator of Figure 1 showing the fully retracted condition.

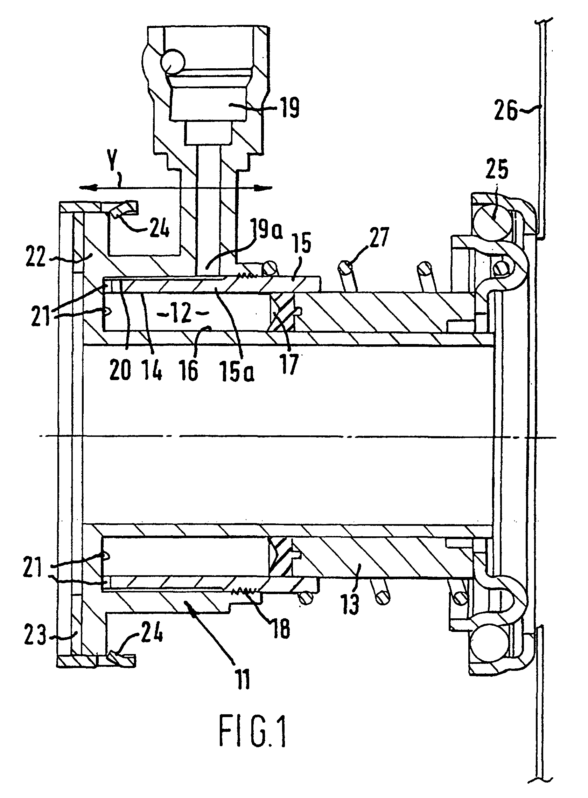

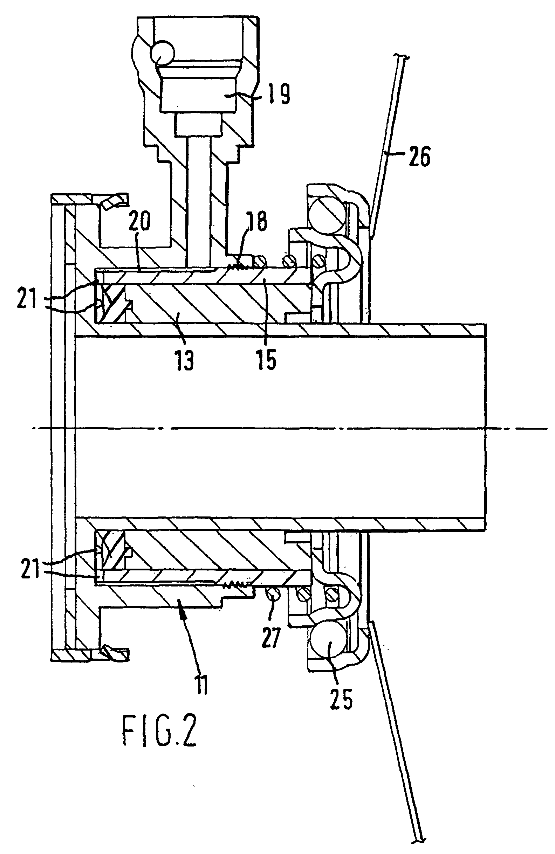

Referring to Figures 1 and 2 an actuator in the form of a concentric slave cylinder 10 comprises a plastics housing 11 within which a working chamber 12 is defined by a slideable plastics piston 13. Piston 13 slides between an outer cylinder wall defined by the inner surface 14 of a plastics sleeve 15 and an inner cylindrical surface 16 which is formed integrally with housing 11. Working chamber 12 is sealed by a rubber seal 17 which is carried on the end of piston 13.

Sleeve 15 is ultrasonically welded into housing 11 by a continuous annular weld 18 thus obviating the need to provide any further seal between housing 11 and sleeve 15.

Fluid enters and leaves working chamber 12 via an external connection 19 which is moulded into housing 11. Fluid flows between the working chamber 12 and the inner end 19a of connection 19 via an annular passage means 20 provided by a reduced external diameter portion 15a of sleeve 15. The inner end of sleeve 15 is notched at a number of locations 21 to ensure unrestricted communication between the passage 20 and chamber 12.

Housing 11 is provided with a flange portion 22 via which the actuator is secured to a bulkhead or other support in the engine compartment of the vehicle. In the arrangement shown the flange portion 22 is clipped to the bulkhead by a metal plate 23 which is bolted or otherwise secured to the bulkhead and which has quick attach tabs 24 which snap over flange 22 to secure the cylinder to the bulkhead.

Piston 13 operates on a clutch release bearing 25 which in turn bears against the radially inner ends of diaphragm spring levers 26 in the know manner. A spring 27 acts between housing 11 and release bearing 25 to ensure a pre-load on the clutch release fingers 26.

Figure 1 shows the actuator in its fully extended condition which is the condition occupied when the actuator is actuated to release the associated clutch. As the driven plate of the associated clutch wears the position occupied by piston 13 in the clutch fully disengaged position will gradually move to the left as viewed in Figure 1 until the clutch becomes fully worn and must be replaced.

Figure 2 shows the actuator in the fully retracted condition when the clutch is fully worn and begins to slip.

As will be appreciated between the fully extended condition shown in Figure 1 and the fully retracted position shown in Figure 2 the clutch seals 17 do not have to pass over any inlet into the working chamber on each movement of the piston and thus seal wear is greatly reduced.

Also because the inlet passage 20 is provided between sleeve 15 and housing 11 it is possible to position the external connection 19 anywhere along the axial length Y of the housing in a connection zone between the sealing of the sleeve 15 to the housing and the closed end of the working chamber 12. This is a particularly useful feature in modern crowded engine compartments where it may be necessary to position the connection 19 in a whole series of different locations to meet the space available in a variety of different engine bay arrangements.

Although in the construction described above both the housing 11, the sleeve 15 and the piston 13 are formed from plastics material (so that the sleeve 15 can be ultrasonically welded to the housing 11 thereby obviating the need for sealing between the sleeve and housing) it will be appreciated that sleeve 15 could be formed from metal and mechanically secured or bonded to housing 11. Also piston 13 could be made from metal if so desired.

Passage 20 between housing 11 and sleeve 15 could be provided by forming shoulder portions both on sleeve 15 and/or on the inside diameter of the bore of housing 11 which receives sleeve 15. Alternatively, instead of producing the passage way 20 by shouldering the cooperating bores, axially extending grooves could be provided either in the internal diameter of the bore of housing 11 and/or in the external diameters of sleeve 15 which extend between the inner end of the sleeve and the inner end 19a of external connection 19.
¹ Sous toutes réserves

## Claims

1. An hydraulic actuator (10) comprising a housing (11) including an annular bore within which an annular piston (13) is slideable to define a working chamber (12), the piston being displaceable from a closed end of the bore towards an open end of the bore on pressurisation of the working chamber via an external hydraulic connection (19), a radially outer wall of the bore being defined by a sleeve (15) which is sealingly fixed (18) to the housing and an axially extending passage (20) being provided radially outboard of the sleeve along which fluid can flow towards the closed end of the working chamber from the external connection, the actuator being **characterised in that** the housing (11) is a plastics material including an outer cylindrical wall and an integral inner cylindrical wall (16) which together with the sleeve (15) defines the annular bore, the outer cylindrical wall having a connection zone of substantially uniform radial thickness which extends from a location adjacent the sealing (18) of the sleeve (15) to the housing (11) to a location adjacent the closed end of the bore and **in that** the external hydraulic connection (19) is also of plastics material and of radially outward projecting tubular form and can be integrally moulded with or secured to the outer cylindrical wall at any point along the connection zone thereby ensuring communication with the axial passage (20) and hence the working chamber (12).

2. An hydraulic actuator according to claim 1 in which the passage (20) is formed by stepping the internal diameter of the housing (11) and/or the external diameter of the sleeve (15).

3. An hydraulic actuator according to claim 1 in which the passage (20) is formed by one or more axially extending grooves provided in the internal diameter of the housing (11) and/or the external diameter of the sleeve (15).

4. An hydraulic actuator according to any one of claims 1 to 3 in which the end of the sleeve (15) at which the passage (20) enters the working chamber (12) is provided with one or more circumferentially spaced notches (21) through which hydraulic fluid enters or leaves the working chamber.

5. An hydraulic actuator according to any one of claims 1 to 4 in which the sleeve (15) is also made from plastics material.

6. An hydraulic actuator according to claim 5 in which the sleeve (15) is ultrasonically welded (18) to the housing (11).

7. An hydraulic actuator according to any one of claims 1 to 4 in which the sleeve (15) is metallic and is mechanically secured to the housing (11).

8. An hydraulic actuator according to any one of claims 1 to 7 in which the housing (11) is adapted to be secured to a bulkhead or other support via a quick-attach fastening (22,23,24).

## Patentansprüche

1. Hydraulische Betätigungsvorrichtung (10) mit einem Gehäuse (11), das eine ringförmige Bohrung enthält, in welcher ein ringförmiger Kolben (13) verschiebbar ist, um eine Arbeitskammer (12) zu bilden, wobei der Kolben von einem geschlossenen Ende der Bohrung aus in Richtung auf ein offenes Ende der Bohrung bei Druckbeaufschlagung der Arbeitskammer über eine externe hydraulische Verbindung (19) verschiebbar ist, wobei eine radial äußere Wand der Bohrung durch eine Hülse (15) gebildet wird, die dichtend an dem Gehäuse befestigt (18) ist und ein axial verlaufender Durchgang (20) radial außerhalb der Hülse vorgesehen ist, entlang dessen ein Fluid in Richtung auf das geschlossene Ende der Arbeitskammer von der externen Verbindung aus strömen kann, wobei die Betätigungsvorrichtung **dadurch gekennzeichnet ist, daß** das Gehäuse (11) ein Kunststoff ist, der eine äußere zylindrische Wand und eine damit einstückige innere zylindrische Wand (16) enthält, die zusammen mit der Hülse (15) die ringförmige Bohrung bildet, wobei die äußere zylindrische Wand eine Verbindungszone mit einer im wesentlichen gleichförmigen radialen Dicke hat, die sich von einer Stelle neben der Dichtung (18) der Hülse (15) gegenüber dem Gehäuse (11) bis zu einer Stelle neben dem geschlossenen Ende der Bohrung erstreckt, und dadurch, daß die äußere Hydraulikverbindung (19) auch aus Kunststoff ist, und eine radial nach außen ragende Rohrform hat und mit der äußeren zylindrischen Wand einstückig gegossen oder an der äußeren zylindrischen Wand an irgend einem Punkt entlang der Verbindungszone befestigt sein kann, wodurch eine Verbindung mit dem axialen Durchgang (20) und somit der Arbeitskammer (12) gesichert ist.

2. Hydraulische Betätigungsvorrichtung nach Anspruch 1, bei der der Durchgang (20) durch Abstufen des Innendurchmessers des Gehäuses (11) und/oder des Außendurchmessers der Hülse (15) gebildet wird.

3. Hydraulische Betätigungsvorrichtung nach Anspruch 1, bei der der Durchgang (20) durch eine oder mehrere axial verlaufende Nuten, die in dem Innendurchmesser des Gehäuses (11) und/oder dem Außendurchmesser der Hülse (15) vorgesehen sind, gebildet wird.

4. Hydraulische Betätigungsvorrichtung gemäß irgend einem der Ansprüche 1 bis 3, bei der das Ende der Hülse (15), an dem der Durchgang (20) in die Arbeitskammer (12) eintritt, mit einer oder mehreren in Umfangsrichtung beabstandeten Kerben (21) versehen ist, durch welche Hydraulikflüssigkeit in die Arbeitskammer eintritt oder aus ihr austritt.

5. Hydraulische Betätigungsvorrichtung nach irgend einem der Ansprüche 1 bis 4, bei der die Hülse (15) auch aus Kunststoff hergestellt ist.

6. Hydraulische Betätigungsvorrichtung gemäß Anspruch 5, bei der die Hülse (15) mit Ultraschall an dem Gehäuse (11) angeschweißt (18) wird.

7. Hydraulische Betätigungsvorrichtung nach irgend einem der Ansprüche 1 bis 4, bei der die Hülse (15) aus Metall ist und mechanisch an dem Gehäuse (11) befestigt ist.

8. Hydraulische Betätigungsvorrichtung nach irgend einem der Ansprüche 1 bis 7, bei der das Gehäuse (11) dafür ausgebildet ist, an einer Trennwand oder an einer anderen Unterlage über eine Schnellbefestigung (22, 23, 24) befestigt zu werden.

## Revendications

1. Actionneur hydraulique (10) comprenant un logement (11) incluant un orifice annulaire à l'intérieur duquel un piston annulaire (13) est coulissant pour définir une cellule de travail (12), le piston étant déplaçable d'une extrémité fermée de l'orifice vers une extrémité ouverte de l'orifice lors de la mise en pression de la cellule de travail via une connexion hydraulique externe (19), une paroi radialement extérieure de l'orifice étant définie par un manchon (15) qui est fixé de manière étanche (18) au logement et un passage s'étendant axialement (20) étant prévu radialement à l'extérieur du manchon, le long duquel le fluide peut s'écouler vers l'extrémité fermée de la cellule de travail à partir de la connexion externe, l'actionneur étant **caractérisé en ce que** le logement (11) est en matière plastique incluant une paroi cylindrique extérieure et une paroi cylindrique intérieure intégrale (16) qui avec le manchon (15) définit l'orifice annulaire, la paroi cylindrique extérieure possédant une zone de connexion d'une épaisseur radiale sensiblement uniforme qui s'étend d'un point adjacent à la fixation (18) du manchon (15) au logement (11) à un point adjacent à l'extrémité fermée de l'orifice et **en ce que** la connexion hydraulique externe (19) est également en matière plastique et de forme tubulaire faisant radialement saillie vers l'extérieur et peut être intégralement moulée ou fixée à la paroi cylindrique extérieure en tout point le long de la zone de connexion, assurant ainsi une communication avec le passage axial (20) et donc la cellule de travail (12).

2. Actionneur hydraulique selon la revendication 1 dans lequel le passage (20) est formé en faisant coïncider¹ le diamètre intérieur du manchon (15) et/ou le diamètre extérieur du manchon (15).

3. Actionneur hydraulique selon la revendication 1 dans lequel le passage (20) est formé par une ou plusieurs rainure(s) s'étendant axialement prévue(s) dans le diamètre intérieur du logement (11) et/ou le diamètre extérieur du manchon (15).

4. Actionneur hydraulique selon l'une quelconque des revendications 1 à 3 dans lequel l'extrémité du manchon (15) par laquelle le passage (20) pénètre dans la cellule de travail (12) est pourvu d'une ou plusieurs encoches espacées circulairement (21) par lesquelles le fluide hydraulique pénètre ou sort de la cellule de travail.

5. Actionneur hydraulique selon l'une quelconque des revendications 1 à 4 dans lequel le manchon (15) est également réalisé en matière plastique.

6. Actionneur hydraulique selon la revendication 5 dans lequel le manchon (15) est soudé ultrasoniquement (18) au logement (11).

7. Actionneur hydraulique selon l'une quelconque des revendications 1 à 4 selon laquelle le manchon (15) est métallique et est fixé mécaniquement au logement (11).

8. Actionneur hydraulique selon l'une quelconque des revendications 1 à 7 dans lequel le logement (11) est adapté pour être fixé à une cloison ou à un autre support au moyen d'une attache à raccordement rapide (22, 23, 24).
